Europäisches Patentamt

European Patent Office

Office européen des brevets

(11) Veröffentlichungsnummer: **0 486 919 A2**

# EUROPÄISCHE PATENTANMELDUNG

(21) Anmeldenummer: **91119216.9**

(22) Anmeldetag: **12.11.91**

(51) Int. Cl.5: **H04L 17/04**

(30) Priorität: **19.11.90 DE 4036818**

(43) Veröffentlichungstag der Anmeldung:
**27.05.92 Patentblatt 92/22**

(84) Benannte Vertragsstaaten:
**AT CH FR IT LI NL SE**

(71) Anmelder: **ANT Nachrichtentechnik GmbH**
**Gerberstrasse 33**
**W-7150 Backnang(DE)**

(72) Erfinder: **Reuber, Hans-Jürgen, Dipl.-Ing.**
**Werastrasse 135**
**W-7000 Stuttgart(DE)**
Erfinder: **Conzelmann, Gerhard, Ing. Grad.**
**Elbinger Strasse 32**
**W-7155 Oppenweiler(DE)**

(54) **Verfahren und Schaltanordnung zur Blocksynchronisation redundanzhaltig encodierter Daten.**

(57) 2.1 Es ist bekannt, bei Verwendung eines systematischen Blockcodes die Prüfseichen zur Synchronisation heranzuziehen. Bekannte Verfahren arbeiten nach dem Prinzip von Versuch und Irrtum, was unter Umständen eine lange Synchronisationzeit bedingt. Dieser Nachteil soll vermieden werden.

2.2 Eine Verkürzung der Synchronisationszeiten kann erreicht werden, indem eine Überprüfung aller n möglichen Blockzuordnungen während eines Blocktaktintervalles durchgeführt wird. Es kann sich dabei um eine parallele Überprüfung durch Verarbeitung der Eingangsdaten im Blocktakt oder um eine serielle Überprüfung durch Verarbeitung der Eingangsdaten im Zeichentakt handeln. Empfangsseitig sind Encoder (E1...,En) vorgesehen, in denen aus den an den Informationsstellen empfangenen k Zeichen eines beliebigen Blocks von n Zeichen gemäß der sendeseitigen Codierung n-k Prüfzeichen erzeugt werden. Weiter sind Komparatoren (K1,..,Kn) vorgesehen, die die n-k Prüfzeichen mit den an den Prüfstellen empfangenen n-k Zeichen des beliebigen Blocks vergleichen und einen Vergleichswert erzeugen, der ein Maß für den Grad der Übereinstimmung ist. Die Vergleichswerte werden jeweils über M Blocktakte zu einem Summensignal aufsummiert, die dann miteinander verglichen werden und es wird die Blockzuordnung als die zur Sendeseite synchrone bestimmt, deren Summensignal dem höchsten erreichten Grad der Übereinstimmung entspricht.

2.3 Wortsynchronisation für systematische feh-lererkennende und fehlerkorrigierde Codes, Datenübertragung.

Fig. 1

Die Erfindung betrifft ein Verfahren zur Blocksynchronisation redundanzhaltig encodierter Daten, wobei ein Datenblock n Zeichen aufweist, die sich aus k Informationszeichen an k festen Informationsstellen im Block und n-k Prüfzeichen an den restlichen n-k Stellen, den Prüfstellen, zusammensetzen, wobei die n-k Prüfzeichen aus den k Informationszeichen gemäß einer Codierung abgeleitet werden, wobei auf der Empfangsseite die an den k Informationsstellen empfangenen Zeichen von einem beliebigen Block mit n Zeichen abgetrennt werden und gemäß der sendeseitigen Codierung n-k Prüfzeichen erzeugt werden, die mit den an den Prüfstellen empfangenen n-k Zeichen des beliebigen Blocks verglichen werden und ein Vergleichswert, der ein Maß für den Grad der Übereinstimmung von den empfangsseitig erzeugten n-k Prüfzeichen und den an den Prüfstellen empfangenen n-k Zeichen des Blocks ist, erzeugt wird. Die Erfindung betrifft außerdem eine Schaltungsanordnung Zur Blocksynchronisation redundanzhaltig encodierter Daten, wobei ein Datenblock n Zeichen aufweist, die sich aus k Informationszeichen an k festen Informationsstellen im Block und n-k Prüfzeichen an den restlichen n-k Stellen, den Prüfstellen, zusammensetzen, wobei die n-k Prüfzeichen aus den k Informationszeichen gemäß einer Codierung abgeleitet werden, wobei empfangsseitig ein Encoder vorgesehen ist, in dem aus den an den Informationsstellen empfangenen k Zeichen eines beliebigen Blockes von n Zeichen gemäß der sendeseitigen Codierung n- k Prüfzeichen erzeugt werden, wobei ein Komparator vorgesehen ist, der die n-k Prüfzeichen mit den an den Prüfstellen empfangenen n-k Zeichen des beliebigen Blocks vergleicht und einen Vergleichswert erzeugt.

Ein gattungsgemäßes Verfahren und eine gattungsgemäße Anordnung sind aus Swoboda, J., Codierung zur Fehlerkorrektur und Fehlererkennung, München, Wien, 1973 bekannt.

Bei der Übertragung von Daten über gestörte Kanäle werden Vorwärtsfehlerkorrekturverfahren zur Minderung der Zeichenfehlerwahrscheinlichkeit verwendet. Auf der Sendeseite werden die Daten in Blöcke zu je k Zeichen unterteilt, nach einer geeigneten Codiervorschrift in Blöcke (Codeworte) zu je n Zeichen (n>k) umcodiert und anschließend seriell über den Kanal übertragen. Die Verschlüsselung erfolgt mit einem systematischen Code, d.h. ein Block (Codewort) weist k Stellen Nachricht und n-k Stellen redundante Prüfzeichen auf. Auf der Empfangsseite müssen die codierten Nachrichten erkannt, korrigiert und decodiert werden. Bei der Decodierung müssen zur Fehlerkorrektur die seriell angelieferten Daten synchron zur Sendeseite in Blöcke zu je n Zeichen verarbeitet werden.

Aus Swoboda, a.a.O., ist ein Korrekturverfahren, die "Korrektur durch Listenvergleich" bekannt, bei dem ein empfangener Block mit allen möglichen Codeworten verglichen wird und das Codewort, das dem empfangenen Block am ähnlichsten ist, als Ergebnis der Korrektur betrachtet wird. Dabei wird davon ausgegangen, daß die empfangenen Daten synchron zur Sendeseite in Blöcke unterteilt wurden.

Zum Zweck der Synchronisation werden üblicherweise Rahmenkennungsworte übertragen, die in festen Abständen den Beginn eines Datenblocks markieren. Nachteilig an diesem Verfahren ist, daß zur Übertragung des Synchronwortes eine erhöhte Kanalkanazität zur Verfügung gestellt werden muß.

In der US-PS 359811 ist die Synchronisation mittels Paritätsbits bei Puls-Code-Systemen beschrieben, und es ist auch ein Blockschaltbild für ein selbstsynchronisierendes Decodersystem mit einem Paritätsbit pro Codewort zu entnehmen.

Aus der EP 100820-A2 ist ein Verfahren zur Synchronübertragung rahmenstrukturierter Daten bekannt, wobei der Rahmen neben dem Datenanteil einen Synchronisationsanteil und zusätzlich einen Fehlerschutzanteil aufweist. Vorteilhafterweise wird der Fehlerschutzanteil oder der Synchronisationsanteil doppelt ausgenutzt, so daß Kanalkapazität eingespart werden kann. Der Fehlerschutzanteil kann also empfangsseitig sowohl zur Synchronisation als auch zur Fehlerkorrektur herangezogen werden. Das Verfahren arbeitet nach dem Prinzip von Versuch und Irrtum. Es geht zunächst von einer beliebigen Lage des Datenblocks aus und verschiebt diese um jeweils eine Stelle, sobald die Anzahl der aus den an den Informationsstellen empfangenen k Zeichen abgeleiteten Zeichen und der n-k an den Prüfstellen empfangenen Zeichen in mehr als s Stellen nicht miteinander übereinstimmen. Dieses Verfahren hat den Nachteil, daS der Synchronisationsvorgang unter Umständen sehr lange Zeit in Anspruch nimmt, da selbst bei fehlerfreier Übertragung im Mittel n:2 und im ungünstigsten Fall n Versuche bis zur Herstellung der Synchronität notwendig sind.

Es ist Aufgabe der Erfindung, ein Verfahren und eine Schaltungsanordnung anzugeben, die unter Beibehaltung der Synchronisationsmöglichkeit eine geringe Kanalkapazität benötigt und mit einer geringen Synchronistionszeit auskommt.

Die Lösung der Aufgabe erfolgt bezüglich des Verfahrens mit den im Patentanspruch 1 angegebenen Verfahrensschritten und bezüglich der Schaltungsanordnung mit den in den Patentansprüchen 4 und 5 angegebenen Mitteln. Vorteilhafte Weiterbildungen des Verfahrens sind in den Patentansprüchen 2 und 3 angegeben.

Das erfindungsgemäße Verfahren weist eine gute Kanalausnutzung auf, wobei die Synchronisationsfähigkeit in keiner Weise eingeschränkt wird. Zudem ist es mit dem erfindungsgemäßen Verfahren möglich, eine Synchronisation nach M Blocktakten zu erreichen. Die Synchronisationszeit ist gegenüber bisherigen Verfahren wesentlich verkürzt worden. Eine hohe Zuverlässigkeit auch bei hohen Kanalfehlerraten ist mit dem erfindungsgemäßen Verfahren erreichbar. Es kann in vorteilhafter Weise in allen Systemen angewendet werden, in denen Daten durch sogenannte systematische fehlererkennende oder fehlerkorrigierende Codes geschützt und die entstehenden Codeworte seriell übertragen werden.

Anhand der Zeichnungen werden Ausführungsbeispiele der Erfindung erläutert. Es zeigen:

Figur 1 ein Blockschaltbild einer sendeseitigen Struktur,

Figur 2 die Datenstruktur der übertragenen Daten,

Figur 3 eine empfangsseitige Synchronisationsschaltung mit paralleler Überprüfung aller n möglichen Blockzuordnungen,

Figur 4 die Datenstruktur für eine Synchronisationsschaltung und

Figur 5 eine empfangsseitige Synchronisationsschaltung mit serieller Verarbeitung aller n möglichen Blockzuordnungen.

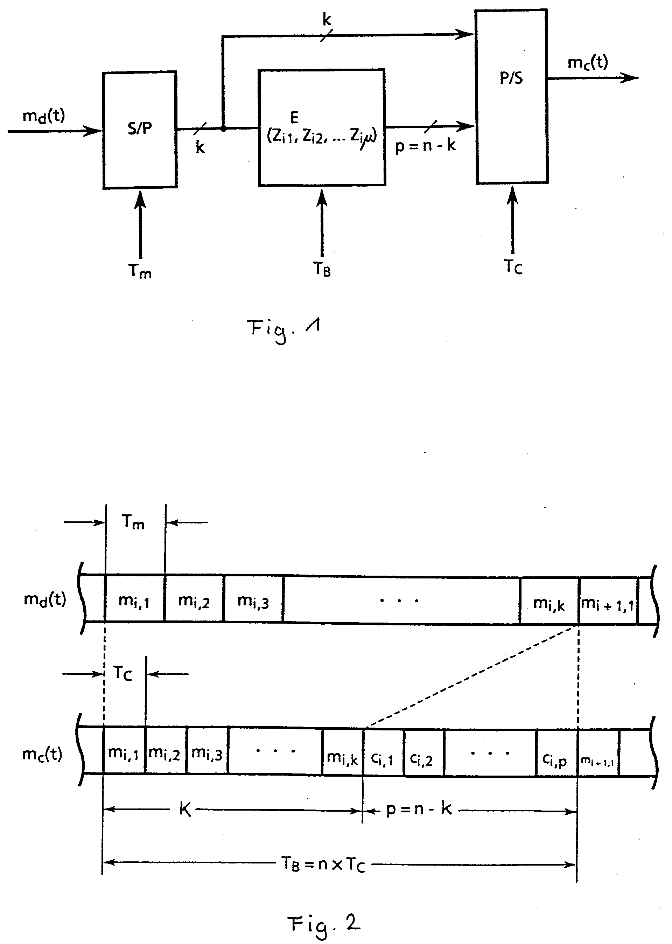

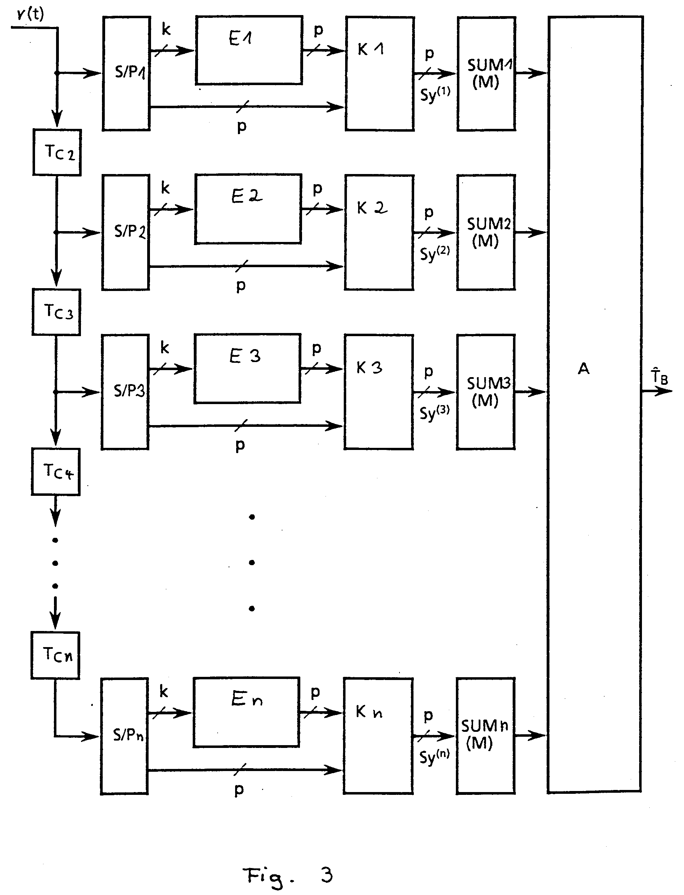

Das Blockschaltbild eines Senders ist in Figur 1 dargestellt. Die zu verarbeitende Datenfolge $m_d(t)$ wird in einem Seriell-Parallel-Wandler S/P mit dem Takt $T_d$ fortlaufend in Blöcke von jeweils k Zeichen unterteilt. Ein Encoder E leitet aus diesen aktuellen Daten und einem durch $\mu$ Zeichen gekennzeichneten Zustand $(Z_{i,1},Z_{i,2},...Z_{i,\mu})$ p = n-k redundante Prüf- oder Paritätszeichen ab. Einem Parallel-Seriell-Wandler P/S werden die k Zeichen umfassende Datenfolge und die p Zeichen umfassende Folge der Paritätszeichen zugeführt. Die Zeichen werden in Blöcke zu insgesamt n Zeichen stukturiert. Dabei stehen die Informationszeichen an beliebigen aber festen Informationsstellen und die Prüfzeichen an beliebigen aber festen Prüfstellen im Block. Die entstandene Datenfolge $m_c(t)$ wird seriell über einen Übertragungskanal übertragen. Die von Störungen überlagerte empfangene Datenfolge r(t) wird einem Empfänger zugeleitet. Man spricht in diesem Fall von systematischen Codes. Eine resultierende Blockstruktur ist Figur 2 zu entnehmen. Oben ist zunächst die zu verarbeitende Datenfolge $m_d(t)$ dargestellt. Sie wird in Blöcke zu je k Zeichen unterteilt ($m_{i,1}$, $m_{i,2}$,...,$m_{i,k}$). Ein Blocktaktintervall $T_B$ entspricht k Zeichentaktintervallen $T_m$ der zu verarbeitenden Datenfolge $m_d(t)$. Aus den k Informationszeichen werden p Paritätszeichen gebildet ($c_{i,1}$,$c_{i,2}$,...$c_{i,p}$), die an den Block mit den k Informationszeichen angehängt werden und einen neuen Block aus n Zeichen bilden. Zur Übertragung bleibt der Blocktakt $T_B$ konstant der Zeichentakt $T_C$ ändert sich jedoch gegenüber dem Zeichentakt $T_m$ der zu verarbeitenden Datenfolge derart, daß

$$T_B = nxT_c.$$

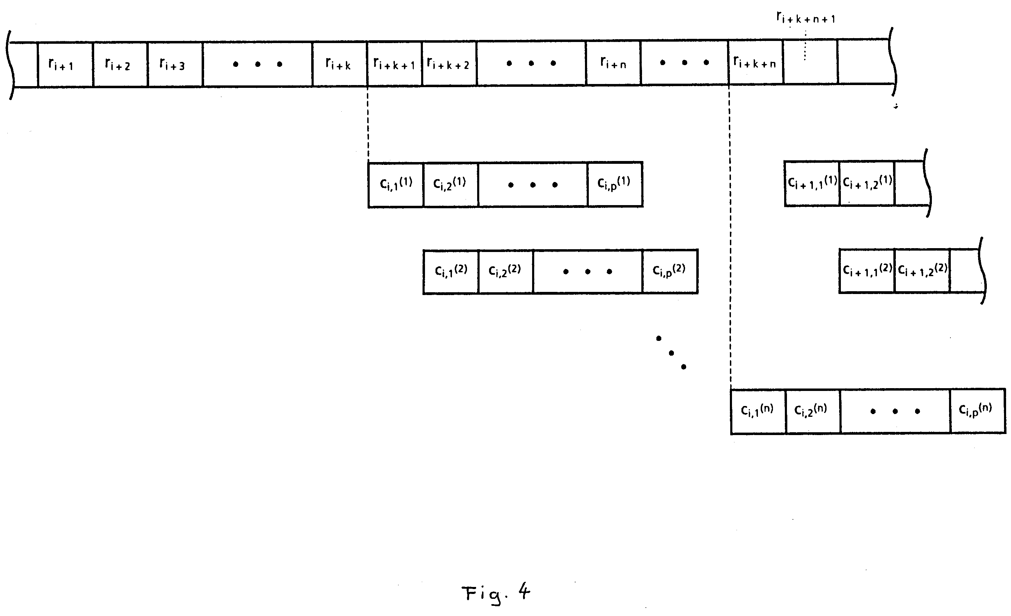

Eine Schaltungsanordnung zur empfangsseitigen Blocksynchronisation ist in Figur 3 dargestellt. Das Prinzip beruht auf der parallelen - also zeitgleichen - Überprüfung aller n möglichen Blockzuordnungen. Das empfangene Datensignal r(t) durchläuft eine Kette von Laufzeitelementen mit einer Verzögerung von jeweils einem Zeichentaktintervall $T_C$. Es entstehen n Signale, nämlich $r(t-jxT_C)$, j = 0,1,..n-1. Jedes der insgesamt n Signale wird jeweils einem Seriell-Parallel-Wandler S/P1, S/P2,..,S/Pn zugeführt, der das Eingangssignal fortlaufend in je n Zeichen umfassende Blöcke unterteilt. Das empfangene Datensignal r(t) ist in Figur 4 dargestellt. Liegt beispielsweise im Zweig mit der Verzögerung $OxT_C$ der Block $r_{i+n}$, $r_{i+n+1}$,...,$r_{i+2n}$ vor, so liegt im Zweig mit der Verzögerung $jxT_C$ der Block $r_{i+n-j}$, $r_{i+n+1-j}$,...,$r_{i+2n-j}$ vor. In jedem Zweig der Schaltungsanordnung wird nun in gleicher Weise verfahren: Die k zeitlich ersten Zeichen des vorliegenden Blocks, die also an den Informationsstellen des Blockes stehen, werden je einem der Encoder E1,E2,...,En zugeführt, der aus den zeitlich ersten k Zeichen und dem aktuellen, durch $\mu$ Zeichen gekennzeichneten Zustand p Prüfzeichen $c_{i,1}^{(j)}$ $c_{i,2}^{(j)}$,..$c_{i,p}^{(j)}$ ableitet. Aus Figur 4 ist ersichtlich, daß in jedem Zweig der Schaltungsanordnung gemäß Figur 3 die Prüfzeichen aus einem um 1 Zeichen verschobenen Block erzeugt werden. In einem Komparator K1, K2,..Kn werden die erzeugten Prüfzeichen mit den zeitlich letzten p Zeichen des betreffenden Blocks, die also an den Prüfstellen des Blockes stehen, verglichen. Die zeitlich letzten p Zeichen sind in den verschiedenen Zweigen ebenfalls um ein Zeichen gegeneinander verschoben (Figur 4). Den Komparatoren K1, K2, ...,Kn werden jeweils von den zugehörigen Seriellparallelwandlern S/P1, S/P2,..., S/Pn die zeitlich letzten p Zeichen des betreffenden Blocks und vom Encoder E1,E2,...,E3 die p Prüfzeichen zugeführt. Am Ausgang jedes Komparators liegt ein Signal $SY_{i,\sigma}^{(j)}$,$\sigma$ = 1,2,...,(n-k) an, der die Übereinstimmung in der $\sigma$ - ten Stellen der beiden zu vergleichenden Blöcke angibt. Vorteilhafterweise wählt man:

$$SY_{i,\sigma}^{(j)} = 0, \text{ falls } c_{i,\sigma}^{(j)} = r_{i+j+k+\sigma-1} \text{ und}$$
$$SY_{i,\sigma}^{(j)} = 1, \text{ falls } c_{i,\sigma}^{(j)} = r_{i+j+k+\sigma-1}.$$

Dieses Signal $SY^{(j)}$ wird jeweils einem der Summierer SUM1, SUM2,...,SUMn zugeführt, der die p Ausgangssignale der betreffenden Komparatoren über die Dauer von jeweils M Blocktakten aufsummiert. Die erzeugten n Summensignale werden anschließend in einem Funktionsblock A zur Auswertung und zur Bestimmung eines Schätzwertes für den Blocktakt $\hat{T}_b$ für den zur Sendeseite synchronen Blocktakt ausgewertet. Für diese Auswertung der insgesamt n über jeweils M Blocktakte gewonnen Summensignale werden zwei mögliche Varianten für die Realisierung als vorteilhaft erachtet:

Schwellenverfahren: Jedes der n Summensignale wird mit einem geeignet definierten Schwellwert verglichen. Unterschreitet das Summensignal des j-ten Zweiges diesen Schwellwert, während alle anderen größer oder gleich dem Schwellwert sind, so wird die diesem Summensignal entsprechende Blockzuordnung als die zur Sendeseite synchrone ausgewählt und der Synchronisationsvorgang beendet. Unterschreiten mehrere Summensignale gleichzeitig diesen Schwellwert, so kann keine eindeutige Entscheidung getroffen werden. In diesem Fall sind die n Summensignale auf den Wert 0 zurückzusetzen und der beschriebene Synchronisationsvorgang ist zu wiederholen.

Minimumverfahren: Aus den n möglichen Blockzuordnungen wird diejenige als die zur Sendeseite synchrone gewählt, die das entsprechend obiger Beschreibung minimale Summensignal liefert. Treten gleichzeitig mehrere minimale Summensignale auf, so sind alle n Summen auf den Wert 0 zurückzusetzen und der beschriebene Synchronisationsvorgang ist zu wiederholen.

Wählt man das Ausgangssignal der Komparatoren nicht derart, daß bei Übereinstimmung eine 0 und bei Nichtübereinstimmung eine 1 anliegt, sondern beispielsweise umgekehrt, so muß auch die Auswertung in anderer Weise erfolgen. Im angegebenen Beispiel wurde dies bedeuten, daß man ein Maximumverfahren hat, d.h., bei maximaler Summe würde maximale Übereinstimmung vorliegen oder man müßte die Überschreitung einer Schwelle kontrollieren.

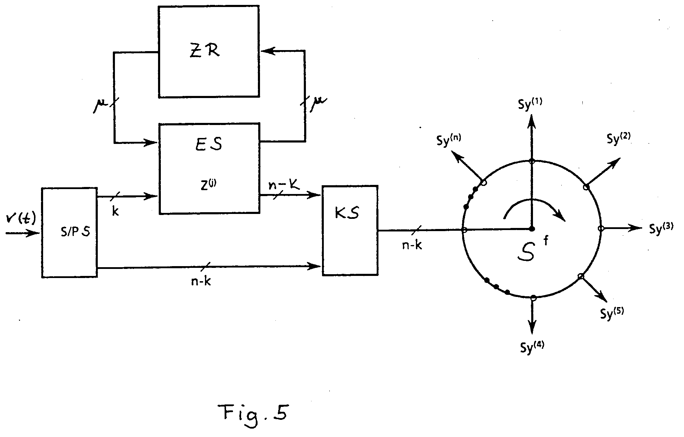

Bisher wurde davon ausgegangen, daß für die n möglichen Blockzuordnungen jeweils ein Zweig mit Encoder und Komparator vorgesehen wird, wobei Encoder und Komparator und auch der Seriell-Parallel-Wandler im Blocktakt $T_B$ arbeiten. Es ist aber auch möglich, die Eingangsdaten nicht im Blocktakt $T_B$ sondern im Zeichentakt $T_C$ zu verarbeiten. Auch dadurch kann man erreichen, daS während eines Blocktaktintervalls für alle n möglichen Blockzuordnungen eine Auswertung und Überprüfung durchgeführt wird. Figur 5 zeigt eine Anordnung, mit der eine serielle Überprüfung aller n möglichen Blockzuordnungen während eines Blocktaktintervalls durchgeführt werden kann. Gegenüber der parallelen Bearbeitung aller möglichen n Blockzuordnungen ist der Schaltungsaufwand für eine serielle Bearbeitung wesentlich geringer. Es ist keine Laufzeitkette notwendig, außerdem wird nur ein Encoder ES und ein Komparator KS benötigt. Diese Arbeiten im Zeichentakt $T_C$. Die empfangenen Daten r(t) werden in einem Seriell-Parallel-Wandler S/PS in Blöcke von n Zeichen unterteilt. Mit jedem zum Seriell-Parallel-Wandler S/PS gelangenden Zeichen ri wird der Block am Ausgang des Seriell-Parallel-Wandlers S/PS um ein Zeichen verschoben. Die ersten k Zeichen des jeweiligen Blockes werden dem Encoder ES zugeführt, dessen Zustand $Z^{(j)}$ zyklisch in einem Register ZR abgelegt bzw. aus diesem Register in den Encoder geladen wird. Am Ausgang des Encoders ES entstehen die Prüfzeichen $C_{i,1}^{(j)}$, $C_{i,2}^{(j)}$,.., $C_{i,p}^{(j)}$ und am Ausgang des Komparators die Signale $SY_{i,1}^{(j)}$ $SY_{i,2}^{(j)}$,...,$SY_{i,p}^{(j)}$ für j = 1,2,..,n im Zeitmultiplex. Durch einen zyklisch über n Positionen umlaufenden Schalter S der mit dem Zeichentakt $T_C$ schaltet, also eine Frequenz f = 1:$T_B$ aufweist, werden die Signale aus dem Komparator KS auf die n Summierer, wie sie in Figur 3 vorgesehen sind, aufgeteilt. Die Auswertung erfolgt, wie dies auch bereits zu Figur 3 beschrieben wurde.

## Patentansprüche

1. Verfahren zur Blocksynchronisation redundanzhaltig encodierter Daten, wobei ein Datenblock n Zeichen aufweist, die sich aus k Informationszeichen an k festen Informationsstellen im Block und n-k Prüfzeichen an den restlichen n-k stellen, den Prüfstellen, zusammensetzen, wobei die n-k Prüfzeichen aus den k Informationszeichen gemäß einer Codierung abgeleitet werden, wobei auf der Empfangsseite die an den k Informationsstellen empfangenen Zeichen von einem beliebigen Block mit n Zeichen abgetrennt werden und gemäß der sendeseitigen Codierung n-k Prüfzeichen erzeugt werden, die mit den an den Prüfstellen empfangenen n-k Zeichen des beliebigen Blocks verglichen werden und ein Vergleichswert, der ein Maß für den Grad der Übereinstimmung von den empfangsseitig erzeugten n-k Prüfzeichen und den an den Prüfstellen empfangenen n-k Zeichen des Blocks ist, erzeugt wird, dadurch gekennzeichnet, daß während eines Blocktaktintervalls, in dem ein Datenblock übertragen wird, für alle n möglichen Blockzuordnungen jeweils ein Vergleichswert erzeugt wird, daß die Vergleichswerte über M Blocktakte (M $\epsilon$ ℕ) zu jeweils einem Summensignal aufsummiert werden, daß die Summensignale der n verschiedenen Blockzuordnungen miteinander verglichen werden und die Blockzuordnung als die zur Sendeseite synchrone gewählt wird, deren Summensignal dem höchsten erreichten Grad der Übereinstimmung von den empfangsseitig erzeugten n-k Prüfzeichen und den an den Prüfstellen empfangenen n-k Zeichen des Blocks entspricht und daß, falls mehrere gleiche Summensignale dem höchsten erreichten Grad der Übereinstimmung entsprechen, die Summensignale auf einen Ausgangswert zurückgesetzt werden und das Verfahren wiederholt wird.

2. Verfahren nach Anspruch 1, dadurch gekennzeichnet, daß eine Überprüfung aller n möglichen Blockzuordnungen parallel, also zeitgleich, durchgeführt wird.

3. Verfahren nach Anspruch 1, dadurch gekennzeichnet, daß eine serielle Überprüfung aller n möglichen Blockzuordnungen durchgeführt wird.

4. Schaltungsanordnung zur Blocksynchronisation redundanzhaltig encodierter Daten, wobei ein Datenblock n Zeichen aufweist, die sich aus k Informationszeichen an k festen Informationsstellen im Block und n-k Prüfzeichen an den restlichen n-k Stellen, den Prüfstellen, zusammensetzen, wobei die n-k Prüfzeichen aus den k Informationsseichen gemäß einer Codierung abgeleitet werden, wobei empfangsseitig ein Encoder vorgesehen ist, in dem aus den an den Informationsstellen empfangenen k Zeichen eines beliebigen Blockes von n Zeichen gemäß der sendeseitigen Codierung n-k Prüfzeichen erzeugt werden, wobei ein Komparator vorgesehen ist, der die n-k Prüfzeichen mit den an den Prüfstellen empfangenen n-k Zeichen des beliebigen Blocks vergleicht und einen Vergleichswert erzeugt, der ein Maß für den Grad der Übereinstimmung von den empfangsseitig erzeugten n-k Prüfzeichen und den an den Prüfstellen empfangenen n-k Zeichen des Blocks ist, dadurch gekennzeichnet, daß eine Kette aus n-1 Laufzeitelementen $(T_{C2}, T_{TC3}, ... T_{CN})$ mit einer Verzögerung von jeweils einem Zeichentaktintervall $(T_C)$ vorgesehen ist, daß n Seriell-Parallel-Wandler $(S/P1,..., S/Pn)$ vorgesehen sind, die jeweils die verzögerten bzw. die unverzögerten empfangenen Daten (r(t)) fortlaufend in Blöcke von n Zeichen unterteilen, die dann jeweils einem der Encoder (E1,E2,..,En) zugeleitet werden, daß die Seriell-Parallel-Wandler $(S/P1;..,S/Pn)$, die Encoder (E1, E2,..,en) und die Komparatoren (K1, K2,..,Kn) mit dem Blocktakt $(T_B)$ arbeiten, daß n Summierer (SUM1,SUM2,..SUMn) vorgesehen sind, die die Vergleichswerte jeweils eines Komparators (K1, K2..,Kn) über M Blocktakte summieren, daß ein Funktionsblock (A) die Summensignale der n verschiedenen Blockzuordnungen vergleicht und die Blockzuordnung als die zur Sendeseite synchrone bestimmt, die dem höchsten erreichten Grad der Übereinstimmung entspricht.

5. Schaltungsanordnung zur Blocksynchronisation redundanzhaltig encodierter Daten, wobei ein Datenblock n Zeichen aufweist, die sich aus k Informationszeichen an k festen Informationsstellen im Block und n-k Prüfzeichen an den restelichen n-k Stellen, den Prüfstellen, zusammensetzen, wobei die Prüfseichen aus den k Informationszeichen gemäß einer Codierung abgeleitet werden, wobei empfangsseitig ein Encoder vorgesehen ist, in dem aus den an den Informationsstellen empfangenen k Zeichen eines beliebigen Blockes von n Zeichen gemäß der sendeseitigen Codierung n-k Prüfzeichen erzeugt werden, wobei ein Komparator vorgesehen ist, der die n-k Prüfseichen mit den an den Prüfstellen empfangenen n-k Zeichen des beliebigen Blocks vergleicht und einen Vergleichswert erzeugt, der ein Maß für den Grad der Übereinstimmung von den empfangsseitig erzeugten n-k Prüfzeichen und den an den Prüfstellen empfangenen n-k Zeichen des Blocks ist, dadurch gekennzeichnet, daß ein Seriell-Parallel-Wandler (S/PS) vorgesehen ist, der mit dem Zeichentakt $(T_C)$ der empfangenen Daten (r(t)) die empfangenen Daten (r(t)) fortlaufend in Blöcke von n Zeichen unterteilt, die dann dem Encoder (ES) zugeleitet werden, daß der Komparator (KS) mit einem zyklisch über n Positionen umlaufenden Schalter (S) verbunden ist, der die Vergleichssignale auf m Summierer (SUM1, SUM2,..,SUMn) aufteilt, daß die m Summierer die Vergleichswerte jeweils einer Blockzuordnung über M Blocktakte summieren, daß ein Funktionsblock (A) die Summensignale der n verschiedenen Blockanordnungen vergleicht und die Blockzuordnung als die zur Sendeseite synchrone bestimmt, die dem höchsten erreichten Grad der Übereinstimmung entspricht.

Fig. 1

Fig. 2

Fig. 3

EP 0 486 919 A2

$r_{i+k+n+1}$

| $r_{i+1}$ | $r_{i+2}$ | $r_{i+3}$ | $\cdots$ | $r_{i+k}$ | $r_{i+k+1}$ | $r_{i+k+2}$ | $\cdots$ | $r_{i+n}$ | $\cdots$ | $r_{i+k+n}$ | | |

| $c_{i,1}^{(1)}$ | $c_{i,2}^{(1)}$ | $\cdots$ | $c_{i,p}^{(1)}$ |

| $c_{i+1,1}^{(1)}$ | $c_{i+1,2}^{(1)}$ | |

| $c_{i,1}^{(2)}$ | $c_{i,2}^{(2)}$ | $\cdots$ | $c_{i,p}^{(2)}$ |

| $c_{i+1,1}^{(2)}$ | $c_{i+1,2}^{(2)}$ | |

| $c_{i,1}^{(n)}$ | $c_{i,2}^{(n)}$ | $\cdots$ | $c_{i,p}^{(n)}$ |

Fig. 4

Fig. 5